**Europäisches Patentamt**

**European Patent Office**

**Office européen des brevets**

(11) Numéro de publication: **0 134 020**

**B1**

(12) **FASCICULE DE BREVET EUROPÉEN**

(45) Date de publication du fascicule du brevet:
05.11.86

(21) Numéro de dépôt: **84109431.1**

(22) Date de dépôt: **08.08.84**

(51) Int. Cl.⁴: **F 01 M 11/04,** F 01 M 11/06,
F 16 N 19/00

(54) Dispositif de raccordement, à un moteur, d'une installation d'entretien du niveau d'huile dans le moteur.

(30) Priorité: **22.08.83 FR 8313570**

(43) Date de publication de la demande:
**13.03.85 Bulletin 85/11**

(45) Mention de la délivrance du brevet:
**05.11.86 Bulletin 86/45**

(84) Etats contractants désignés:
**BE CH DE GB IT LI NL SE**

(56) Documents cité:
**DE-A-1 950 834**
**DE-A-2 354 293**
**FR-A-331 705**
**FR-A-1 058 522**
**GB-A-24 417**
**GB-A-1 448 024**
**US-A-3 335 736**
**US-A-3 590 857**

(73) Titulaire: **Société Civile Particulière dite
CONSORTIUM DE RECHERCHE POUR
L'APPLICATION DES FLUIDES CRAF, Le Clos
des 4 Vents, F-49650 Brian- sur Allones (FR)**

(72) Inventeur: **Javelly, Christian, Le Moulin de la
Motte, F-49650 Allonnes (FR)**
Inventeur: **Paris, René, 8 Chemin du Bois Brard
Saint- Hilaire Saint- Florent, F-49400 Saumur (FR)**

(74) Mandataire: **Casalonga, Axel, BUREAU D.A.
CASALONGA OFFICE JOSSE & PETIT
Morassistrasse 8, D-8000 München 5 (DE)**

EP 0 134 020 B1

## Description

La présente invention se rapporte à un dispositif pour le raccordement, à un moteur à explosion, d'une installation d'entretien du niveau d'huile dans le moteur.

On connaît déjà des installations de ce type qui sont composées d'une cuve à niveau constant communiquant d'une part avec un réservoir d'huile et d'autre part avec le moteur, en dessous du niveau d'huile prescrit dans ce dernier. Une installation de ce type est par exemple décrite dans la demande de brevet français n° 82 03 176 déposée le 25 février 1982. (FR-A-2 522 066).

Pour pouvoir raccorder une telle installation d'entretien de niveau d'huile au carter d'un moteur, il est nécessaire de pratiquer un trou dans ledit carter. Dans le cas où un tel trou de raccordement n'est pas prévu d'avance, c'est-à-dire à la fabrication du moteur, il est donc nécessaire, pour réaliser ce raccordement, de déposer le carter, de percer le trou, généralement de changer le joint entre le carter et le bloc-moteur et de remonter ensuite le carter. Il s'agit là d'une opération relativement longue et coûteuse.

Dans le mesure où les carters des moteurs à explosion comportent un trou de vidange à leur point le plus bas, on pourrait penser que le raccordement de l'installation d'entretien de niveau d'huile pourrait se faire sur ce trou de vidange. Toutefois, de nombreuses raisons vont à l'encontre de l'utilisation du trou de vidange à cet effet.

D'une part, si l'on branchait un raccord de l'installation d'entretien. du niveau d'huile sur le trou de vidange, il serait nécessaire de dévisser ce raccord pour effectuer la vidange. A moins d'utiliser un raccord tournant, ce dévissage présenterait des difficultés. De plus, lors du dévissage du raccord, toute huile contenue dans l'installation d'entretien de niveau d'huile s'écoulerait par le raccord. A ce sujet, l'installation d'un robinet d'arrêt dans la conduite reliant la cuve à niveau constant au raccord ne peut pas être envisagée car si ce robinet n'était par inadvertance pas ouvert après rebranchement du raccord sur le trou de vidange, l'installation d'entretien de niveau d'huile resterait hors d'action.

Enfin si l'installation d'entretien de niveau d'huile était branchée sur le trou de vidange, c'est-à-dire sur le point le plus bas du moteur, la conduite reliant la cuve à niveau constant au carter se trouverait en partie située en dessous du moteur, de sorte qu'il ne serait pas possible d'exclure avec certitude le risque de rupture de cette conduite, notamment dans le cas de moteur de véhicules. Or, une telle rupture provoquerait non seulement l'échappement de l'huile contenue dans l'installation d'entretien de niveau d'huile, mais également l'échappement de toute l'huile contenue dans le carter du moteur.

La présente invention a pour objet un dispositif permettant, par des moyens simples et peu coûteux, de raccorder en toute sécurité une installation d'entretien de niveau d'huile au trou de vidange du carter d'un moteur à explosion.

L'invention concerne donc un dispositif de raccordement, à un moteur, notamment à un moteur de véhicule, d'une installation d'entretien du niveau d'huile dans le moteur, cette installation étant composés d'une cuve à niveau constant communiquant avec un réservoir d'huile et avec le moteur, en dessous du niveau d'huile prescrit dans ce dernier. Ce dispositif comprend un raccord muni à une première extrémité d'un embout fileté susceptible d'être vissé dans le trou de vidange du carter du moteur. Ce raccord est muni, à une seconde extrémité, de moyens de raccordement de la conduite provenant de la cuve à niveau constant de l'installation d'entretien de niveau d'huile. Ce raccord est muni, entre lesdites deux extrémités, d'un clapet permettant un écoulement de l'huile de la cuve à niveau cons tant vers le moteur, mais empêchant l'écoulement de l'huile en sens opposé. Ledit raccord est en outre muni, entre ledit clapet et ladite première extrémité, d'un orifice taraudé susceptible d'être obturé par un bouchon à vis. Le raccord est enfin muni de moyens commandant le clapet, sous l'action du bouchon à vis, de manière à assurer le fonctionnement normal du clapet lorsque le bouchon est vissé dans l'orifice taraudé et à bloquer le clapet en position fermée lorsque le bouchon est dévissé.

Le raccord du dispositif conforme à l'invention peut ainsi être vissé une fois pour toutes dans le trou de vidange du carter du moteur, la vidange du moteur pouvant s'effectuer par dévissage du bouchon à vis. Le clapet empêche, en cas de rupture de la conduite reliant la cuve à niveau constant au carter du moteur, l'huile contenue dans le carter de s'échapper. A ce sujet, il y a lieu de noter que la cuve à niveau constant est munie d'un contact électrique grâce auquel, à la suite d'une rupture de cette conduite, qui entraîne l'échappement de l'huile contenue dans l'installation d'entretien de niveau d'huile, le conducteur du véhicule est averti, par exemple par un voyant, dès que l'installation d'entretien en contient plus d'huile. Les moyens bloquant le clapet en position fermée lorsque le bouchon est dévissé lors de la vidange font que sans aucune intervention humaine telle que par exemple la fermeture d'un robinet, qui présente toujours un risque d'oubli par exemple de réouverture du robinet après la vidange, l'échappement de l'huile contenue dans l'installation d'entretien de niveau d'huile est empêchée en toute sécurité pendant la vidange et la communication de cette installation avec le carter du moteur est obligatoirement rétablie après la vidange.

Suivant un mode de réalisation préféré, le clapet comprend une bille mobile dans un logement délimité dans un sens par une butée par la bille et dans l'autre sens par un siège de bille qui est moble, sous l'action d'un ressort, en direction de ladite butée. Des moyens sont prévus sur le siège ou reliés au siège pour coopérer avec le bouchon, notamment avec la tête du bouchon, lors que ce dernier est vissé dans l'orifice taraudé. Ces moyens maintiennent ainsi le siège éloigné de la butée lorsque le bouchon est vissé, permettant ainsi au clapet d'assurer sa fonction anti-retour, mais assurent, lorsque le bouchon est dévissé, que le siège soit rapproché par ledit ressort de la butée, le bille en appui contre cette butée venant ainsi se plaquer sur le siège, de sorte que le clapet se trouve bloqué en position fermée.

Pour simplifier l'orientation correcte du raccord par rapport à la conduite venant de la cuve à niveau constant, il est avantageux que le raccord comprenne une première partie comportant ledit embout fileté et ledit orifice taraudé, ainsi qu'une seconde partie séparable de la première et comportant ledit clapet et lesdits moyens de commande du clapet. Ces deux parties présentent alors des moyens pour l'immobilisation de la seconde partie dans différentes positions angulaires autour de l'axe de l'embout fileté de la première partie. Il est ainsi possible d'orienter correctement la seconde partie à laquelle est reliée la conduite provenant de la cuve à niveau constant, indépendamment de la position angulaire dans laquelle la première partie est inmobilisée à la suite du vissage à fond de l'embout fileté dans le trou taraudé du carter.

De préférence, lesdits moyens comprennent sur la première partie un six pans extérieur servant également au vissage dans le trou taraudé du carter et sur la seconde partie une surface susceptible d'être amenée à coopérer sélectivement avec l'un des six pans de la première partie en vue de l'inmobilisation angulaire.

Pour simplifier encore la structure et le montage du raccord, il est avantageux que la première partie du raccord comprenne un embout de révolution lisse entre le six pans extérieur et l'orifice taraudé, tandis que la seconde partie comprend un élément creux présentant une forme intérieure complémentaire de celle dudit embout lisse. Cet élément creux est prolongé, à l'extrémité tournée vers le six pans de la première partie, par une saillie susceptible de coopérer sélectivement avec l'un quelconque des pans de la première partie.

Ledit élément creux de la seconde partie peut avantageusement présenter la forme d'une cuvette percée à son fond d'un trou pour le passage de la tige filetée du bouchon à vis. Ainsi, la seconde partie est maintenue sur la première partie par la tête du bouchon à vis.

Afin d'empêcher la seconde partie de quitter la première partie lors du dévissage du bouchon, il est avantageux de prévoir un joint torique entre ledit embout de révolution, de préférence cylindrique, et la surface intérieure, également de préférence cylindrique, de l'élément creux de la seconde partie.

D'autres caractéristiques et avantages ressortiront de la description donnée ci-après d'un mode de réalisation illustratif et non limitatif du dispositif de raccordement conforme à l'invention; sur le dessin:

la fig. 1 est une vue schématique d'un moteur à explosion auquel une installation d'entretien de niveau d'huile est raccordée par le trou de vidange du carter du moteur;

la fig. 2 est une vue en élévation, à plus grande échelle, du raccord du dispositif conforme à l'invention;

la fig. 3 est une coupe axiale du raccord de la fig. 2;

la fig. 4 est une coupe axiale selon la fig. 3, après enlèvement du bouchon à vis en vue de la vidange du moteur.

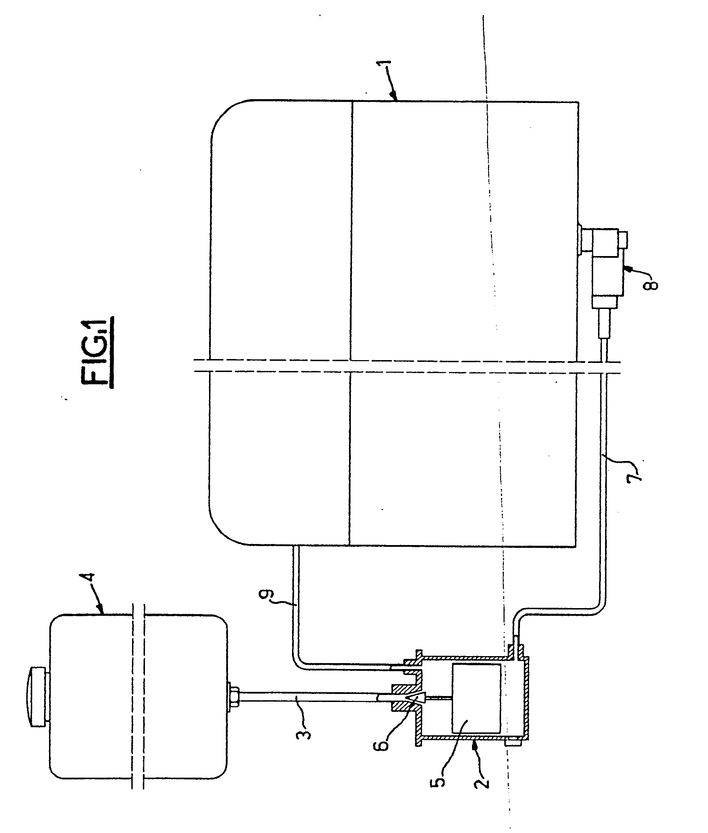

Selon la fig. 1, une installation de maintien de niveau d'huile raccordée à un moteur à explosion 1 comprend une cuve à niveau constant 2 raccordée par une conduite 3 à un réservoir d'huile 4 surélevé. La cuve 2 renferme un flotteur 5 qui porte un clapet 6 commandant l'admission d'huile du réservoir 3 dans la cuve 2 en fonction du niveau d'huile dans la cuve 2.

La cuve 2 est reliée, à sa partie inférieure, par une conduite 7 et un raccord 8, au carter du moteur 1. La cuve 2 est par ailleurs reliée à sa partie supérieure par une conduite 9 à la partie supérieure du moteur 1, en vue de l'équilibrage de pression.

La conduite 7 relie entre eux le carter du moteur 1 et la cuve à niveau constant 2 à la manière de deux vases communiquant, de sorte que le même niveau d'huile s'établit dans le carter du moteur 1 et dans la cuve 2, niveau qui est commandé par le flotteur 5 portant le clapet 6.

Le raccord 8 est destiné à relier la conduite 7 au trou de vidange du moteur 1, lequel trou se trouve au point le plus bas du carter.

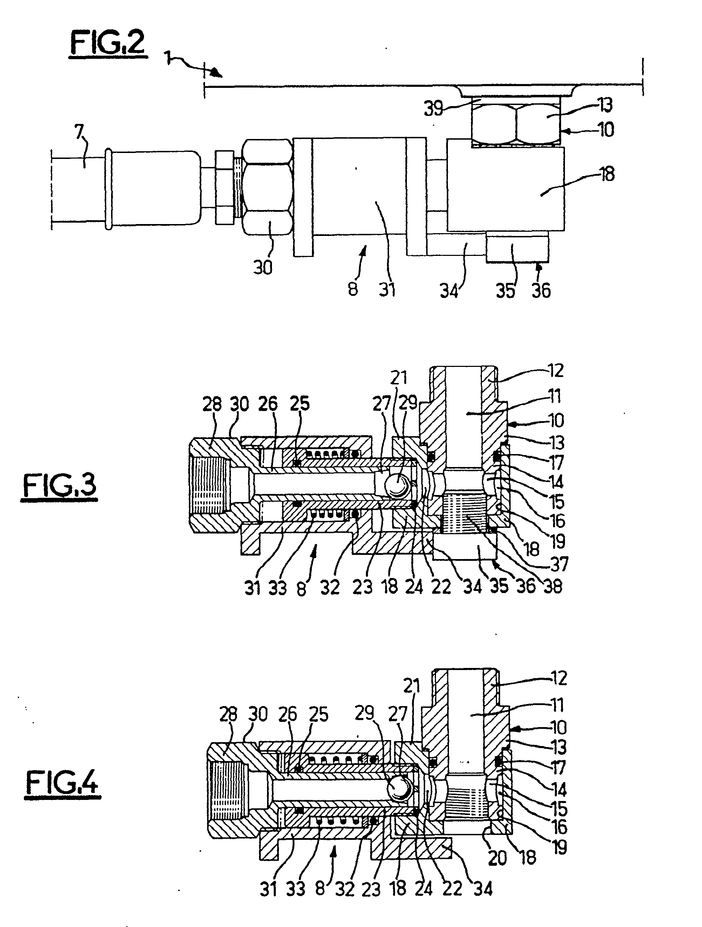

Selon les fig. 2 et 3, le raccord 8 comprend une pièce 10 traversée par un trou axial 11. La pièce 10 présente à une extrémité, un embout fileté 12 dimensionné de manière à pouvoir être vissé dans le trou taraudé de vidange à axe vertical prévu dans le carter du moteur 1. L'embout 12 est suivi d'un six pans extérieur 13 grâce auquel l'embout 12 peut être vissé dans le trou de vidange. A la suite du six pans 13, la pièce 10 comporte un embout cylindrique 14. Dans l'embout cylindrique 14 sont ménagés, sensiblement à mi-longueur de ce dernier, deux trous radiaux 15 diamétralement opposés et une gorge circonférentielle extérieure 16. Un joint torique 17 est par ailleurs monté dans une gorge ménagée dans l'embout cylindrique 14 entre la gorge 16 et le six pans 13. Le trou de passage 11 de la pièce 10 est taraudé depuis l'extrémité libre de l'embout cylindrique 14 jusqu'aux trous radiaux 15.

Sur l'embout cylindrique 14 de la pièce 12 est emboîtée une pièce 18 ayant la forme d'une cuvette dont la surface latérale intérieure 19 cylindrique est ajustée à la surface latérale extérieure de l'embout 14. La pièce 18 est percée à son fond d'un trou 20 d'un diamètre légèrement supérieur à celui du trou 11.

A l'extrémité opposée au fond de la cuvette, la pièce 18 présente une saillie 21 formant un méplat susceptible de coopérer avec n'importe lequel des pans du six pans 13 de la pièce 10 de manière à immobiliser la pièce 18 par rapport à la pièce 10 dans sa position angulaire autour de l'axe du trou 11.

La pièce 18 est percée d'un trou radial 22 qui débouche dans la gorge 16 lorsque la pièce 18 est engagée à fond sur l'embout 14 de la pièce 10. Le trou 22 est taraudé dans sa partie extérieure, de diamètre accru.

Dans la partie taraudée du trou 22 est vissée l'extrémité filetée d'un manchon 23, un disque ajouré 24 en une matière déformable étant inséré entre l'extrémité du manchon 23 et le fond de la partie taraudée de diamètre accru du trou 22.

A l'intérieur du manchon 23 qui présente une gorge intérieure recevant un joint torique 25 est montée coulissante une douille 26 présentant un élargissement conique intérieur 27 à son extrémité tournée vers le disque 24. A son autre extrémité 28 de diamètre extérieur accru, la douille 26 comporte un trou taraudé permettant le raccordement d'une conduite, en l'occurrence de la conduite 7 provenant de la cuve à niveau constant 2. L'extrémité 28 comporte un six pans extérieur 30.

Une bille 29 d'un diamètre compris entre le diamètre inférieur et le diamètre supérieur de l'élargissement conique 27 de la douille 26 est placée entre ce dernier et le disque 24.

Avant le vissage du manchon 23 dans le trou 22 de la pièce 18, une pièce 31 en forme de godet percée d'un trou à son fond est engagée sur le manchon 23, depuis l'extrémité filetée de ce dernier. La pièce 31 comporte à son fond un joint torique 32 assurant l'étanchéité par rapport au manchon 23. Un ressort de compression 33 est intercalé entre le fond de la pièce 31 et un renflement prévu à l'extrémité opposée du manchon 23. L'extrémité ouverte de la pièce 31 est taraudée et vissée sur un filetage de l'extrémité 28 de la douille 26.

Ainsi, lorsque l'ensemble comprenant la pièce 31, la douille 26 et le manchon 23 est assemblé avec la pièce 18, le ressort 33 pousse la pièce 31 et avec elle la douille 26 solidaire de la pièce 31, en direction de la pièce 18.

La pièce 31 comporte, sur son fond, un doigt 34 faisant saillie en dessous du fond de la pièce 18. Ce doigt 34 est destiné à coopérer avec la surface latérale de la tête 35 d'un bouchon à vis 36 dont la tige filetée 38 est vissée dans la partie inférieure taraudée du trou 11 de la pièce 10, ce bouchon 36 pouvant être retiré pour permettre la vidange du moteur.

En se référant aux fig. 2, 3 et 4, on va décrire ci-après le mode de montage et le mode de fonctionnement du raccord 8.

Pour la pose du raccord 8, on dévisse le bouchon 36 et on retire vers le bas de la pièce 10 l'ensemble constitué par les pièces 18, 23, 26 et 31. On visse ensuite l'embout fileté 12 dans le trou taraudé de vidange du carter du moteur 1, en intercalant un joint d'étanchéité 39 entre le six pans 13 de la pièce 10 et le bossage du trou de vidange du carter (fig. 2).

On engage ensuite la pièce 18 dont sont solidaires les pièces 23, 26 et 31, depuis le bas sur l'embout cylindrique 14 de la pièce 10, cela dans la position angulaire (par rapport à l'axe de la pièce 10) convenant le mieux pour le raccordement de la conduite 7 à l'extrémité 28 de la douille 26, jusqu'à ce que la saillie 21 prévue sur la pièce 18 coopère par son méplat avec l'un des pans du six pans 13. Le raccord occupe alors la position visible sur la fig. 4, la pièce 31 et la douille 26 étant poussées vers la droite sur cette figure de manière que la bille 29 soit à la fois en butée contre le disque 24 et en appui contre le siège 27. Dans cette position, l'extrémité libre du doigt 34 de la pièce 31 déborde à l'intérieur du prolongement vers le bas du trou 11 de la pièce 10.

On peut alors brancher ensuite la conduite 7 sur l'extrémité libre 28 de la douille 26.

Par la suite, on visse le bouchon 36 muni d'un joint d'étanchéité 37 dans la partie inférieure taraudée du trou 11 de la pièce 10, après avoir repoussé à la main la pièce 31 vers la gauche, à l'encontre de l'action du ressort 33, afin que la tête 35 du bouchon 36 n'interfère pas avec le doigt 34. Lorsque le bouchon 36 est vissé dans la pièce 10, le doigt 34 vient porter, sous l'action du ressort 33, contre la tête 35 du bouchon 36, comme représenté sur les fig. 2 et 3, pour à maintenir le siège de bille 27 prévu à l'extrémité libre de la douille 26 écarté du disque 24 de manière que la bille ne se trouve pas plaquée sur son siège, mais soit mobile dans le logement délimité par le siège 27 et le disque 24.

Après introduction de la quantité requise d'huile dans le moteur 1, soit par un orifice de remplissage prévu en partie haute du moteur, soit éventuellement par le réservoir 4 de l'installation de maintien de niveau d'huile, et après purge de la conduite 7, l'installation d'entretien de niveau d'huile peut fonctionner normalement, la bille 29 permettant le passage de l'huile de la cuve à niveau constant 2 dans le carter du moteur 1.

Pour vidanger le moteur 1, on dévisse le bouchon 36. Dès que le doigt 34 de la pièce 31 n'est plus en appui contre la tête 35 du bouchon 36, le ressort 33 pousse les pièces 31 et 26 vers la droite et amène ainsi la bille 29, en butée contre le disque 24, en appui contre le siège 27. De ce fait, aucune huile ne peut s'écouler de la conduite 7 par l'orifice de vidange dégagé par le bouchon 36.

Le moteur étant vidangé, il suffit de repousser vers la gauche la pièce 31 pour écarter le doigt 34 et pouvoir revisser le bouchon 36 et libérer la bille, en rétablissant ainsi la communication de la cuve à niveau constant 2 avec le carter du moteur 1.

En cas de rupture de la conduite 7, l'huile contenue dans le carter du moteur 1 à tendance à s'écoule par gravité en traversant le clapet constitué par la bille 29 et le siège 27, dans le sens contraire au sens d'écoulement de l'huile pendant l'entretien de niveau d'huile. Sous l'effet de cet écoulement d'huile en sens contraire, la bille est entraînée vers la gauche et monte sur le siège tronconique 27, à axe de révolution horizontal sur lequel elle se trouve ainsi plaquée. La bille fait donc office de clapet anti-retour empêchant l'échappement de l'huile contenue dans le carter.

Dès que toute l'huile contenue dans le réservoir de l'installation d'entretien de niveau d'huile s'est écoulée par la conduite 7 rompue, le conducteur du véhicule est averti par exemple par un voyant commandé par un contact électrique actionné par le flotteur 5. Etant donné que toute l'huile contenue dans le carter du moteur avant rupture de la conduite 7 reste dans le carter, le conducteur dispose encore d'une autonomie appréciable.

Il va de soi que le mode de réalisation décrit ci-dessus et représenté sur le dessin annexé n'a été donné qu'à titre illustratif et non limitatif et que de nombreuses modif ications et varinntes sont possibles dans le cadre de l'invention.

## Revendications

1. Dispositif de raccordement, à un moteur à explosion, d'une installation d'entretien du niveau d'huile dans le moteur, composée d'une cuve à niveau constant communiquant avec un réservoir d'huile et avec le moteur, en dessous du niveau d'huile prescrit dans ce dernier, caractérisé par le fait qu'il comprend un raccord (8) muni à une première extrémité d'un embout fileté (12) susceptible d'être vissé dans le trou de vidange du moteur, à une seconde extrémité de moyens pour le raccordement de la conduite (7) provenant de la cuve à niveau constant (2), entre lesdites extrémités d'un clapet permettant un écoulement d'huile depuis la cuve à niveau constant (2) vers le carter du moteur (1) et empêchant l'écoulement de l'huile en sens contraire, entre ledit clapet et ladite première extrémité d'un orifice taraudé susceptible d'être obturé par un bouchon à vis (36), et de moyens commandant le clapet, sous l'action du bouchon à vis, de manière à assurer le fonctionnement normal du clapet lorsque le bouchon est vissé dans l'orifice taraudé et à bloquer le clapet en position fermée lorsque le bouchon est dévissé.

2. Dispositif suivant la revendication 1, caractérisé par le fait que le clapet comprend une bille (29) mobile dans un logement délimité dans un sens par une butée (24) pour la bille et dans l'autre sens par un siège de bille (27) mobile, sous l'action d'un ressort (33), en direction de la butée, des moyens (34) solidaires dudit siège étant prévus pour coopérer avec le bouchon (36) lorsque ce dernier est vissé dans l'orifice taraudé de manière à maintenir le siège suffisamment écarté de la butée pour autoriser la mobilité de la bille.

3. Dispositif suivant la revendication 1 ou 2, caractérisé par le fait que le raccord (8) comprend une première partie (10) comportant ledit embout fileté (12) et ledit orifice taraudé et une seconde partie (18, 23, 26, 31) séparable de ladite première partie et comportant ledit clapet et lesdits moyens de commande du clapet, lesdites deux parties présentant des moyens (13, 21) pour l'immobilisation de la seconde partie par rapport à la première dans différentes position angulaire autour de l'axe de l'embout fileté de la première partie.

4. Dispositif suivant la revendication 3, caractérisé par le fait que lesdits moyens comprennent sur la première partie (10) un six pans extérieur (13) et sur la seconde partie un méplat susceptible de coopérer sélectivement avec l'un des pans du six pans de la première partie.

5. Dispositif suivant la revendication 4, caractérisé par le fait que la première partie (10) comprend un embout de révolution lisse (14) entre le six pans extérieur (13) et l'orifice taraudé et que la seconde partie comprend un élément creux (18) présentant une forme intérieure complémentaire de celle dudit embout lisse et prolongé, à l'extrémité tournée vers le six pans, par une saillie (21) présentant un méplat susceptible de coopérer avec l'un quelconque des pans du six pans extérieur.

6. Dispositif suivant la revendication 5, caractérisé par le fait que ledit élément (18) présente la forme d'une cuvette percée à son fond d'un trou (20) pour le passage de la tige filetée du bouchon à vis (36).

7. Dispositif suivant l'une quelconque des revendications précédentes, caractérisé par le fait que ledit siège de bille (27) est un siège tronconique à axe de révolution horizontal.

## Patentansprüche

1. Vorrichtung zum Anschluß einer Einrichtung zum Konstanthalten des Schmiermittelstandes in einem Verbrennungsmotor, an einen Motor, mit einer mit einem Öltank und mit dem Motor unterhalb des vorgeschriebenen Ölstandes im Motor kommunizierenden Konstantpegelwanne, gekennzeichnet durch ein an einem Ende mit einem in die Ölablassöffnung des Motors einschraubbaren Gewindeansatz (12) versehenes Anschlußstück (8), das am anderen Ende mit Mitteln zum Anschluß der von der Konstant pegelwanne (2) kommenden Leitung (7) versehen ist, zwischen den beiden Enden ein Ventil enthält, das den Ölfluß von der Konstantpegelwanne (2) zum Kurbelgehäuse des Motors (1) gestattet und den Ölfluß in umgekehrter Richtung verhindert, und zwischen dem Ventil und dem ersten Ende eine Gewindebohrung besitzt, die mit einem Schraubstopfen (36) verschlossen werden kann, und mit Mitteln, um das Ventil unter der Wirkung des Schraubstopfens derart zu betätigen, daß das normale Arbeiten des Ventils gesichert ist, sobald der Schraubstopfen in die Gewindebohrung eingeschraubt ist, und das Ventil in geschlossener Stellung blockiert ist, wenn der Schraubstopfen herausgeschraubt ist.

2. Vorrichtung gemäß Anspruch I, dadurch gekennzeichnet, dan das Ventil eine in einer in der einen Richtung durch einen Anschlag (24) für die Kugel und in der anderen Richtung durch einen unter dem Druck einer Feder (33) in Richtung auf den Anschlag hin beweglichen Kugelsitz (27) begrenzten beweg Kugel (29) enthält, wobei mit dem genannten Sitz verbundene den Anschlag hin beweglichen Kugelsitz (27) begrenzten bew. Kugel (28) enthält, wobei mit dem genannten Sitz verbunde Mittel (34) vorgesehen sind, die mit dem Gewindestopfen (36) zusammenarbeiten, wenn dieser in die Gewindebohrung einge ist, um den Sitz genügend weit vom Anschlag entfernt zu halten um die Bewegung der Kugel zu erlauben.

3. Vorrichtung gemäß Anspruch 1 oder 2, dadurch gekennzeichnet daß das Anschlußstück (8) einen ersten Teil (10) mit dem Gewindeansatz (12) und der Gewindebohrung und einen zweiten, vom ersten Teil trennbaren Teil (18, 23, 26, 31) mit dem Ventil und den Ventilbetätigungsmitteln enthält, wobei die zwei Teile Mittel (13, 21) besitzen, um den zweiten Teil gegenüber dem ersten Teil in unterschiedlichen Winkellagen um die Achse des Gewindeansatzes des ersten Teils festzulegen.

4. Vorrichtung gemäß Anspruch 3, dadurch gekennzeichnet, daß die genannten Mittel auf dem ersten Teil (10) aus einem Aussensechskant (13) und auf dem genannten zweiten Teil aus einer Abflachung bestehen, die wahlweise mit einer der Flächen des Sechskantes des ersten Teils zusammenwirken kann.

5. Vorrichtung gemäß Anspruch 4, dadurch gekennzeichnet, daß der erste Teil (10) einen glatten rotationssymmetrischen Ansatz (14) zwischen dem Außensechskant (13) und der Gewindebohrung enthält, und daß der zweite Teil ein Hohlelement (18) besitzt, das eine zu der Form des glatten Ansatzes komplementäre Innenform aufweist und an seinem dem Sechskant zugewandten Ende durch einen Vorsprung (21) verlängert ist, der eine Abflachung besitzt, die wahlweise mit einer der Flächen des Außensechskantes zusammenwirken kann.

6. Vorrichtung gemäß Anspruch 5, dadurch gekennzeichnet, daß genannte Element (18) die Form eines Topfes mit einer dessen Boden durchdringenden Bohrung (20) besitzt, durch die der Gewindeschaft des Gewindestopfens (36) geführt wird.

7. Vorrichtung gemäß einem beliebigen der vorstehenden Ansprüche, dadurch gekennzeichnet, daß der Kugelsitz (27) kegelstumpfförmig mit waagerecht liegender Rotationssymmetrieachse ausgebildet ist.

**Claims**

1. Device for connecting to an internal-combustion engine a system for maintaining the oil level in the engine, the system consisting of a constant-level vessel communicating with an oil tank and with the engine below the prescribed level of oil in the latter, characterized in that it comprises a connector (8) equipped at a first end with a threaded connecting piece (12) capable of being screwed into the drainage hole of the engine, at a second end with means for connecting the pipe (7) coming from the constant-level vessel (2), between the said ends with a valve allowing oil to flow from the constant-level vessel (2) towards the sump of the engine (1) and preventing the oil from flowing in the opposite direction, between the said valve and the said first end with a tapped orifice capable of being closed off by means of a screw plug (36), and with means controlling the valve under the action of the screw plug, so as to ensure the normal operation of the valve when the plug is screwed into the tapped orifice and block the valve in the closed position when the plug is unscrewed.

2. Device according to Claim 1, characterized in that the valve comprises a ball (29) movable in a receptacle delimited in one direction by a stop (24) for the ball and in the other direction by a ball seat (27) movable in the direction of the stop under the action of a spring (33), means (34) integral with the said seat being provided to interact with the plug (36) when the latter is screwed into the tapped orifice, so as to keep the seat sufficiently distant from the stop to allow the ball to be movable.

3. Device according to Claim 1 or 2, characterized in that the connector (8) comprises a first part (10) possessing the said threaded connecting piece (12) and the said tapped orifice and a second part (18, 23, 26, 31) which can be separated from the said first part and which possesses the said valve and the said means of controlling the valve, the said two parts having means (13, 21) for immobilizing the second part relative to the first in different angular positions about the axis of the threaded connecting piece of the first part.

4. Device according to Claim 3, characterized in that the said means comprise, on the first part (10), an outer hexagon (13) and, on the second part, a flat surface capable of interacting selectively with one of the faces of the hexagon of the first part.

5. Device according to Claim 4, characterized in that the first part (10) has a smooth connecting piece of revolution (14) between the outer hexagon (13) and the tapped orifice, and in that the second part has a hollow element (18) of an inner shape matching that of the said smooth connecting piece and, at the end facing the hexagon, extended by means of a projection (21) having a flat surface capable of interacting with any one of the faces of the outer hexagon.

6. Device according to Claim 5, characterized in that the said element (18) takes the form of a cup perforated in its bottom with a hole (20) for the passage of the threaded stem of the screw plug (36).

7. Device according to any one of the preceding claims, characterized in that the said ball seat (27) is a frusto - conical seat with a horizontal axis of revolution.

## FIG.1

FIG.2

FIG.3

FIG.4